**Europäisches Patentamt**

**European Patent Office**

**Office européen des brevets**

(19)

(11) Veröffentlichungsnummer: **0 060 539**
**A1**

# (12) EUROPÄISCHE PATENTANMELDUNG

(21) Anmeldenummer: **82102032.8**

(22) Anmeldetag: **13.03.82**

(51) Int. Cl.³: **F 24 F 7/007**

(30) Priorität: **16.03.81 DE 3110099**

(43) Veröffentlichungstag der Anmeldung: **22.09.82**
**Patentblatt 82/38**

(84) Benannte Vertragsstaaten: **AT BE DE FR GB IT LU NL SE**

(71) Anmelder: **Baumann, Peter, Heylstrasse 6, D-6000 Frankfurt/Main (DE)**

(72) Erfinder: **Baumann, Michael, Ruhestrasse 11, D-7239 Fluorn-Winzeln 2 (DE)**
Erfinder: **Baumann, Peter, Heylstrasse 7, D-6000 Frankfurt/Main 50 (DE)**
Erfinder: **Lehmann, Dirk, Winzelner Strasse, D-7230 Schramberg (DE)**

(74) Vertreter: **Renaud, Klaus T., Dr. jur., Adolfsallee 43 Postfach 48 25, D-6200 Wiesbaden 1 (DE)**

(54) **Ventilatorvorrichtung mit zwei gegensinnig laufenden Ventilatoren.**

(57) Es handelt sich um eine Zweiwegeventilatorvorrichtung, bestehend aus einem Gehäuse (19, 20) und axial nebeneinander angeordneten, als Axialgebläse aufgebauten Ventilatoren (1, 2), die zu beiden Seiten einer Trennwand (3) in dem Gehäuse angebracht sind. In die auf diese Weise in zwei Teilräume aufgeteilten, getrennten Luftströmungen ragen wärmeleitende Elemente (8 bis 13) hinein, die einen Temperaturausgleich zwischen beiden Luftströmen herbeiführen.

ACTORUM AG

EP 0 060 539 A1

LB 513 — 2 — 0060539

beidseitig einer Trennwand angeordnet sind.

Aus der GB-PS 520 641 ist eine Ventilatorvorrichtung bekannt, bei der zwei axial hintereinander angeordnete Radiallüfter vorgesehen sind, die gegensinnig laufen und mit Hilfe entsprechender Luftführungen eine Zweiwegelüftervorrichtung bilden. Hierdurch ist es möglich, mit einer einzigen Ventilatorvorrichtung von einer Stelle eines Raumes aus diesen zu be- und entlüften. Die bekannte Vorrichtung weist aber den Nachteil auf, daß dem zu belüftenden Raum ständig kalte Frischluft zugeführt wird, wodurch der Raum nach und nach auskühlt und zu viel Wärmeenergie an anderer Stelle wieder zugeführt werden muß.

Aus der DE-PS 1 776 198 ist ein Gerät für den Wärmeaustausch zwischen zwei Luftströmen bekannt, bei dem die Reibung zwischen Luft und Speichermasse zum Erzeugen einer Kreiselgebläsewirkung zur Förderung der Luftströme ausgenutzt wird. Nachteilig hierbei sind sehr schlechte, aerodynamische Werte dieser Vorrichtung, die zu einem ständigen Luftaustausch zwischen Zu- und Abluftkammer führen. Dadurch wird ein erheblicher Teil der geförderten Luft in der Vorrichtung selbst wieder in die Gegenrichtung gefördert und mit der Frischluft vermischt, so daß diese Vorrichtung einen sehr schlechten Wirkungsgrad aufweist.

Der Erfindung liegt die Aufgabe zugrunde, eine Ventilatorvorrichtung zu schaffen, die im Zweiwegesystem einen
Luftaustausch eines Raums an einer Stelle ermöglicht
und dabei die Temperaturverluste der Raumluft möglichst
gering hält.

Erfindungsgemäß wird die Aufgabe durch die im Kennzeichen
des Anspruchs 1 aufgeführten Merkmale gelöst.

Weitere, vorteilhafte Ausgestaltungen der Erfindung gehen
aus den Unteransprüchen hervor.

Die Erfindung wird an einem Ausführungsbeispiel anhand
einer Zeichnung erläutert. Es zeigen

Fig. 1    im Schnitt die erfindungsgemäße Lüftervorrichtung,

Fig. 2    einen Schnitt durch die Vorrichtung gemäß Fig. 1
entlang einer Linie II-II,

Fig. 3    einen Schnitt durch die Vorrichtung gemäß Fig. 1
entlang einer Linie III-III.

0060539

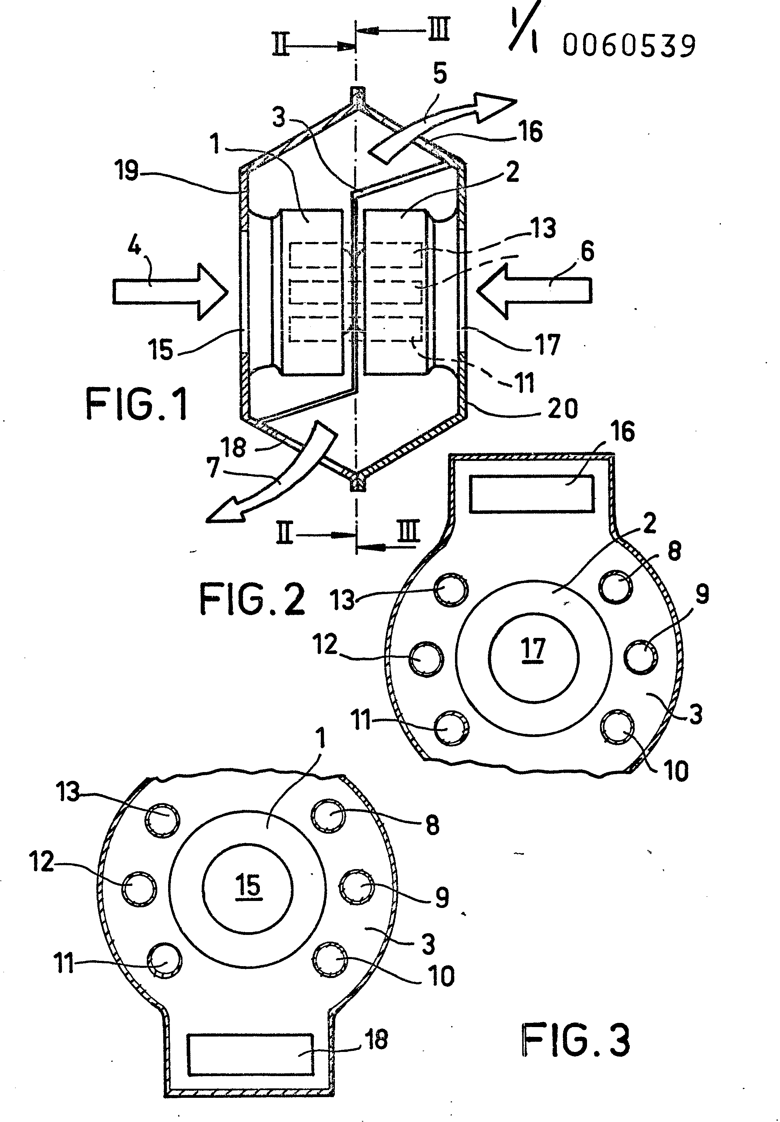

Ein Gehäuse der Lüftervorrichtung wird von Gehäuseteilen 19, 20 (Fig. 1) gebildet. In dem einen Gehäuseteil 19 sind eine Zuluftöffnung 15 und eine Abluftöffnung 18 vorgesehen. In dem anderen Gehäuseteil 20 sind eine Zuluftöffnung 17 und eine Abluftöffnung 16 vorhanden. Dabei ist die Zuluftöffnung 15 der Abluftöffnung 16 zugeordnet, der durch beide Öffnungen hindurchtretende Luftstrom ist durch Pfeile 4, 5 angedeutet. Andererseits ist die Zuluftöffnung 17 der Abluftöffnung 18 zugeordnet, der durch beide Öffnungen hindurchtretende Luftstrom ist durch Pfeile 6, 7 angedeutet. Die Zuordnung der Öffnungen für den jeweils hindurchtretenden Luftstrom wird durch eine Trennwand 3 bestimmt, die den Gehäuseinnenraum in strömungstechnisch voneinander getrennte Räume aufteilt. Der o.g. Aufbau ist an sich bekannt.

Zwei Ventilatoren 1, 2 (Fig. 1) sind axial nebeneinander zu beiden Seiten der Trennwand 3 angeordnet. Sie halten zwischen sich einen kleinen Abstand und sind beim Ausführungsbeispiel als Radialventilatoren aufgebaut, die Zuluft zentrisch ansaugen und Abluft radial abgeben.

Außerhalb der Ventilatoren 1, 2 (Fig. 2, 3) sind wärmeübertragende Elemente 8, 9, 10, 11, 12, 13 (Fig. 2, 3) vorgesehen, die die Trennwand 3 durchdringen und auf

LB 513 - 5 - 

0060539

beiden Seiten derselben etwa gleich weit herausragen.
Es handelt sich bei ihnen in der Regel um beidseitig
geschlossene Behälter, die mit einem bei niedriger Temperatur verdampfenden Medium gefüllt sind. Dementsprechend
verdampft das Medium auf der Warmluftseite und gelangt
zur Kaltluftseite, wo das Medium wieder in den flüssigen
Zustand übergeht und zur Warmluftseite zurückkehrt.
Statt dessen können aber auch einfache Metallkörper aus
Kupfer oder Aluminium verwendet werden, die eine ausreichende Wärmeleitfähigkeit aufweisen. Es sind sogenannte
"Heat Pipes" auf dem Markt, die ebenfalls als wärmeleitende Körper eingesetzt werden können. Ferner sind
Peltier-Elemente einsetzbar.

Wenn beispielsweise in Richtung des Pfeils 6 angewärmte
Raumluft über die Zuluftöffnung 17 in das Gehäuse 19,
20 der Ventilatorvorrichtung eintritt und diese über die
Abluftöffnung 18 wieder verläßt, umströmt diese angewärmte
Luft vor Austritt aus dem Gehäuse 19, 20 die wärmeübertragenden Elemente 8, 9, 10, 11, 12, 13 und erwärmt sie
auf dieser Seite der Trennwand 3. Die Wärme gelangt
auch zu dem Teil der Elemente 8, 9, 10, 11, 12, 13, der
jeweils auf der Gegenseite der Trennwand 3 angeordnet
ist. Die in Richtung des Pfeils 4 in das Gehäuse 19, 20
über die Zuluftöffnung 15 hineinströmende kalte Frisch-

LB 513 - 6 - 0060539

luft umströmt die so vorgewärmten Bereiche der wärmeübertragenden Elemente 8, 9, 10, 11, 12, 13 und erwärmt sich hierbei, bevor sie über die Abluftöffnung 16 das Gehäuse in Richtung des Pfeils 5 wieder verläßt. Hierdurch ist eine Erwärmung kalter Frischluft sichergestellt, so daß die Wärmeverluste durch Abluftableitung und Frischluftzufuhr in dem zu belüftenden Raum wesentlich gesenkt werden können.

Um die Wirkung der wärmeübertragenden Elemente zu erhöhen, können diese auch durch Fremdenergie aufgeheizt oder im Bedarfsfall abgekühlt werden, um in der warmen Jahreszeit einem Raum kühlere Luft zuführen zu können.

Die beiden Ventilatoren 1, 2 können gleich groß dimensioniert sein, im Bedarfsfall können sie aber auch verschieden groß ausgeführt sein, um z.B. Luftverluste auf der einen oder anderen Seite auszugleichen. Ein gleicher Effekt wird durch verschiedene Drehzahlen der beiden Ventilatoren 1, 2 erreicht.

Anstatt von Radialventilatoren können auch Axial-, Querstrom- oder Kapillargebläse eingesetzt werden. Die wärmeleitenden Elemente können aus metallischem Vollmaterial bestehen.

## Ansprüche

1. Ventilatorvorrichtung mit zwei gegensinnig laufenden Ventilatoren, die beidseitig einer Trennwand angeordnet sind und entgegengesetzte Luftströme erzeugen, dadurch gekennzeichnet, daß wärmeübertragende Elemente (8, 9, 10, 11, 12, 13) vorgesehen sind, die die Trennwand (3) durchragen und sich auf deren einer Seite in den Bereich wärmerer Luft des einen Ventilators (2) und sich auf deren anderer Seite in den Bereich kälterer Luft des anderen Ventilators (1) erstrecken.

2. Vorrichtung nach Anspruch 1, dadurch gekennzeichnet, daß die wärmeleitenden Elemente (8, 9, 10, 11, 12, 13) aus beidseitig geschlossenen Körpern aufgebaut sind.

3. Vorrichtung nach den Ansprüchen 1 und 2, dadurch gekennzeichnet, daß die wärmeleitenden Elemente (8 bis 13) aus Metall bestehen.

13.3.1981
V/v

LB 513 - 8 -

0060539

4. Vorrichtung nach Anspruch 3, dadurch g e k e n n -
z e i c h n e t , daß in den wärmeleitenden Elementen (8 bis 13) ein bei niedriger Temperatur verdampfendes Medium eingeschlossen ist.

5. Vorrichtung nach den Ansprüchen 1 bis 3, dadurch
g e k e n n z e i c h n e t , daß die wärmeleitenden
Elemente (8 bis 13) aus Vollmaterial bestehen.

6. Vorrichtung nach Anspruch 1, dadurch g e k e n n -
z e i c h n e t , daß die wärmele:tenden Elemente
(8 bis 13) "Heat Pipes" sind.

7. Vorrichtung nach Anspruch 1, dadurch g e k e n n -
z e i c h n e t , daß die wärmeleitenden Elemente
mittels Fremdenergie aufgeheizt werden.

8. Vorrichtung nach Anspruch 1, dadurch g e k e n n -
z e i c h n e t , daß die wärmeleitenden Elemente
(8 bis 13) durch Fremdenergie gekühlt werden.

1/1    0060539

FIG.1

FIG.2

FIG.3

Europäisches
Patentamt

**EUROPÄISCHER RECHERCHENBERICHT**

0060539
Nummer der Anmeldung

EP 82 10 2032

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 330 965 (A.B. SVENSKA FLAKTFABRIKEN) * Seite 3, Zeilen 2-31; Seite 4, Zeilen 4-35; Figuren 1,2 * | 1,4 | F 24 F 7/007 |
| Y | | 2,3,5-8 | |
| | --- | | |
| Y | CH-A- 578 157 (STOCKLIN) * Spalte 1, Zeilen 28-67; Spalte 2, Zeilen 1-6, 18-26; Figuren 1,2 * | 2,4,6 | |
| | --- | | |
| Y | DE-A-2 930 990 (GRUN) * Seite 3, 2 letzten Absätze; Seite 4, Absatz 1; Seite 5, Absätze 1,2; Figur 1a * | 5 | |
| | --- | | RECHERCHIERTE SACHGEBIETE (Int. Cl. ³) |
| Y | DE-A-2 556 329 (KUMMERLE) * Seite 8; Seite 9, Absätze 1-3; Figuren 1-4 * | 3,5 | F 24 F F 04 D |
| | --- | | |
| Y | DE-A-2 833 787 (KABEL- UND METALLWERKE GUTEHOFFNUNGSHUTTE A.G.) * Seite 3, Zeilen 1-18; Seite 4, Zeilen 7-33; Seite 5, Zeilen 5,6; Seite 6, Zeilen 8-34; Figuren 1,2 * | 3,4,6 | |
| | --- | | |

Der vorliegende Recherchenbericht wurde für alle Patentansprüche erstellt.

| Recherchenort | Abschlußdatum der Recherche | Prüfer |
|---|---|---|
| DEN HAAG | 17-06-1982 | PHOA Y.E. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-1 560 601 (LUKOMSKY)<br>* Seite 1, linke Spalte, Absätze 1-4; rechte Spalte, Absätze 1-5; Seite 2, linke Spalte, Absätze 1-4; Figuren * | 7,8 | |
| | --- | | |
| A,D | GB-A- 520 641 (YOUNGER) | | |
| | ----- | | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 17-06-1982 | PHOA Y.E. |